# EUROPEAN PATENT APPLICATION

(11) **EP 1 568 411 A2**
(43) Date of publication of application: **31.08.2005**
(21) Application number: 05075472.0
(22) Date of filing: 12.12.1997
(51) Int. Cl.: B01F 15/02, B01F 3/18

(54) **Gravimetric blender material storage hopper with integral dispensing valve**

(30) Priority: 13.12.1996 US 32831 P; 02.05.1997 US 45343 P; 30.05.1997 US 71503 P
(62) Divisional of application: 97954838.5
(71) Applicant: Maguire Products, Inc., Media, PA 19063 (US)
(72) Inventor: Maguire, Stephen B., Glen Mills, Philadelphia (US)
(74) Representative: Lees, Kate Jane

(57) **Abstract**

A granular material storage hopper (12) adapted to matingly removably rest on a frame portion (14) of a gravimetric blender (10), having a material discharge orifice proximate the hopper bottom, with the gravimetric blender including a weigh bin (15) receiving material dispensed from the hopper, at least one load cell (32) for sensing weight of material received in the weigh bin and a mix chamber (20) below the weigh bin for collecting and mixing material received from the weigh bin after weight has been sensed, comprising means (19) for selectably dispensing granular material from the hopper through said material discharge orifice proximate the hopper bottom, being fixedly connected to the hopper and movable unitarily with the hopper as the hopper is lifted from the frame.

## Description

### Background of the Invention

This invention relates generally to methods and apparatus for providing precisely measured amounts of granular materials preparatory to further processing of the combined granular materials and specifically to granular material storage hoppers adapted to removably rest on the frame portion of gravimetric blender apparatus, for providing components of granular material for measurement and weighing by the gravimetric blender.

### Field of the Invention and

### Description of the Prior Art

Gravimetric blenders operate by blending solid plastic resin material components and additives, by weight, in batches. Typically batches of material may consist of several solid material components. One of these may be "regrind", consisting of ground plastic resin which had previously been molded or extruded and which either resulted in a defective product or was excess material not formed into a desired product.

Another component may be "natural" plastic resin which is virgin in nature in the sense that it has not previously been processed into a molded or extruded plastic part.

Yet another component may be a solid color material, typically pellets, flakes or freeze dried material, used to produce a desired color of the finished plastic part. The most common colorant is in the form of pellets which are preloaded with pigment, perhaps 50 percent by weight, called "concentrate" or "masterbatch". Optionally, a liquid colorant may be added as an alternative to solid color material.

Still yet another component may be an additive used to adjust the blend to provide required performance characteristics during molding, extrusion or subsequent processing.

The gravimetric blender as originated by the applicant and as copied widely throughout the world typically includes hoppers for each of the components of the solid material to be blended together. Typically several hoppers or several compartments in a hopper may be provided, such as one compartment for "regrind" material, one compartment for "natural" material, one component for solid color additive material and one compartment for "additive". When the gravimetric blender operates, the unit desirably operates automatically, adding each of the component solid materials in the proper, desired percentages. Each solid material component is dispensed by weight into a single weigh bin. Once the proper amounts of each component have been serially dispensed into the weigh bin, all of the components are dropped together into a mixing chamber from the weigh bin.

### Summary of the Invention

In one of its aspects this invention provides a granular material storage hopper adapted to removably rest on the frame portion of the gravimetric blender. The storage hopper preferably has a material discharge orifice proximate the hopper bottom. The gravimetric blender includes a weigh bin receiving material dispensed from the hopper and means, preferably one or more load cells, for sensing weight of material received in weigh bin. The gravimetric blender preferably further includes a mix chamber below the weigh bin for collecting and mixing material received from the weigh bin after weight of the material has been sensed while the material is in the weigh bin.

The granular material storage hopper portion of the invention further includes means for selectably dispensing granular material from the hopper through the material discharge orifice proximate the hopper bottom. The means for selectably dispensing granular material from the hopper is fixedly connected to the hopper, located substantially within the hopper and is removable unitarily with the hopper upon the hopper being lifted from the gravimetric blender frame.

The means for selectably dispensing granular material from the hopper through the orifice is desirably a valve. Means for actuating the valve is desirably in the form of a pneumatically actuated piston-cylinder combination.

Desirably, the means for actuating the valve is fixedly connected to the hopper, the actuating means is at least partially within the hopper, the valve means is at least partially within the hopper, the hopper is manually removable from the frame.

Quick-connect fittings are provided to connect and disconnect the actuator to control means for the blender.

The actuating means is pneumatically driven and includes a vertically elongated member for transmitting motion to the valve.

The gravimetric blender with which the granular material storage hopper of the invention is adapted for use includes a frame, a weigh bin, means connected to the frame for sensing weight of material in the bin, a mix chamber below the bin and connected to the frame, means connected to the frame for selectively contacting and opening the bin to release material in the bin downwardly into the mix chamber. The blender further preferably includes means for biasing an openable portion of the bin towards a closed position; the openable portion is preferably movable about a pivot; the openable portion preferably pivots about a horizontal axis; the means for selectively contacting and opening the bin is preferably pneumatically actuated; the means for selectively contacting and opening the bin is preferably a piston-cylinder combination; the cylinder is preferably outboard of the frame; the piston preferably moves transversely to the axis about which the openable portion pivots; the piston may contact the bin directly or indirectly; the openable portion is preferably pivotally connected to a remaining, stationary portion of the bin.

The piston is preferably separate from the openable portion and is operable to engage and displace the openable portion when the sensed weight of material in the weigh bin results in continued closure of the hoppers thereby interrupting feed to the weigh bin preparatory to discharge. The weigh bin is removably mounted on the weight sensor to facilitate changing of the bin when changing the character of the mix being blended.

The blender also includes a mixing chamber into which the weigh bin is discharged. The mixing chamber is positioned below the weigh bin behind the transparent panel and includes a removable agitator.

### Brief Description of the Drawings

Figure 1 is a side elevation of a gravimetric blender of reduced size embodying the invention of the parent application hereto.
Figure 2 is a top plan view of the blender shown in Figure 1 with the lid on one of the hoppers thereof removed.
Figure 3 is a front elevation of the blender shown in Figure 1.
Figure 4 is a sectional view through a hopper illustrating a valving device for controlling the outflow of the hopper, the valving device being in the open position.
Figure 5 is a fragmentary sectional view similar to Figure 4 showing the valving device in a closed position.
Figure 6 is a view similar to Figure 4 showing an alternative valving device in the closed position.
Figure 7 is an exploded view of the valving device of Figure 4.
Figure 8 is a similar view of the valving device of Figure 6.
Figure 9 is a fragmentary perspective view of the tubular valve element of the embodiment shown in Figure 4.
Figure 10 is a fragmentary sectional view showing the weigh bin removably mounted on the weight sensor.
Figure 11 is a detached side elevation of the weigh bin showing the openable portion in closed position.
Figure 12 is a front view partially in section and partially broken away of the structure shown in Figure 11.
Figure 13 is an exploded view in side elevation of a removable agitator for the mixer and
Figure 14 is an assembled view of the mixer shown in Figure 13.

### Detailed Description of the Invention

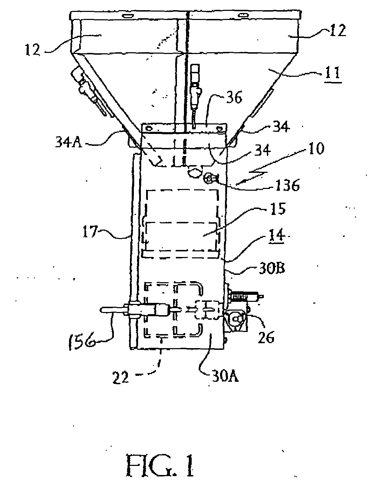

Referring to the drawings and to Figures 1-3 in particular, a gravimetric blender is designated generally 10 and includes a hopper assembly 11 including a plurality of hoppers, which are individually designated generally 12. The collection of hoppers 12, each of which is individually removable from blender 10 manually, without the use of tools, is supported by a frame designated generally 14 which holds a weigh bin 15 into which portions of solid plastic resin or other granular or powdery material can be metered and weighed prior to release into a mix chamber as described below.

Frame 14 preferably includes four upstanding side panel members, three of which are preferably steel and formed from a single sheet, bent to form the three sides, with the three sides being identified 30A, 30B and 30C. The remaining front side panel of frame 14, which is removable and detachable from sides 30, is designated 17 in the drawings and is preferably clear, transparent plastic.

Hopper assembly 11 with the desirable plurality ofhoppers 12 allows a plurality of different solid resinous materials to be dispensed from the hoppers 12 into weigh bin 15 by suitable valve mechanisms, designated generally 19, located within and proximate to the bottom of a given hopper 12. The hoppers 12 are individually manually mountable on and removable from gravimetric blender 10 by hand, without use of tools.

The upper extremity of each solid side panel 30 of frame 14 is formed into an outwardly flared guide flap 34. In the preferred configuration since there are three solid side panels 30A, 30B and 30C, three outwardly flared guide flaps 34 result. Outwardly flared guide flaps 34 are integral with and formed as a part of solid side panels 30A, 30B and 30C by bending the upper extremities of solid side panels into a cradle having the shape illustrated in the drawings.

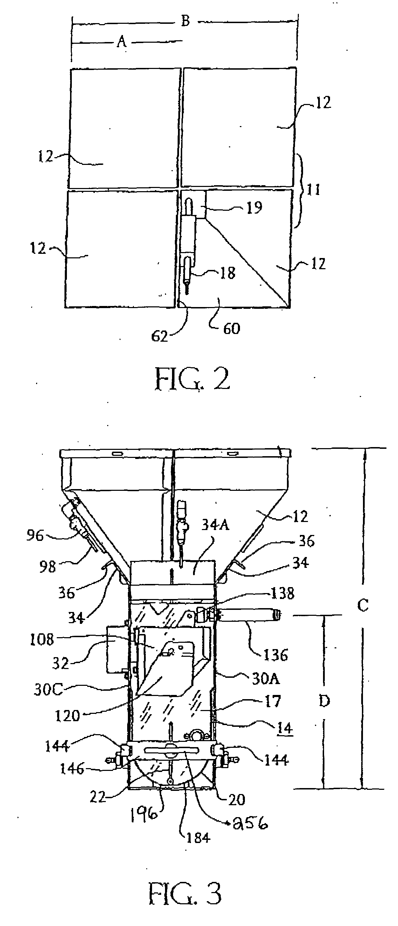

A fourth outwardly flared guide flap 34A (see Fig. 3) is positioned above transparent removable front panel 17 and is welded to the upper extremities of the two solid side panels 30A and 30C between which transparent removable front panel 17 fits.

Outwardly flared guide flaps 34 and 34A of the panels 30A and 30C preferably include tab members 36 which are perpendicular to the remaining portion of guide flaps 34, 34A and extend therefrom in a generally downwardly direction. This provides a convenient frame hand-hold for an operator while lifting a hopper 12 from the cradle formed by the flaps 34 and 34A on the frame 14 of the blender 10. Hoppers 12 are easily individually manually lowered into position in the cradle formed by the flaps 34 and 34A, and are easily manually lifted out thereof.

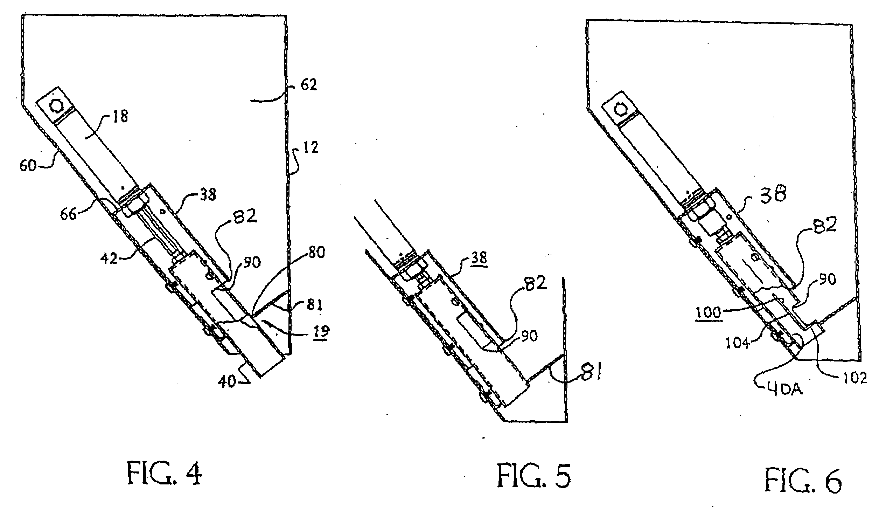

Gravimetric blender 10 further includes a valve for each hopper. The valve is designated generally 19 in the drawings. Each valve includes a hollow tubular preferably cylindrically configured valve member designated 40. The member is slidable along its cylindrical axis through a circular valve opening or orifice 80 in the bottom wall 81 of the hopper. As shown in Figures 4 through 8, the hollow valve member is open at the lower end and is closed at the top end where it is connected to the piston of a piston-cylinder combination. The cylindrical wall of the valve member 40 has a port 90 which affords flow of material from within the hopper 12 to the interior of valve member 40 and from there downwardly within the interior of valve member 40 and hence passing through the opening 80.

The valve member 40 is operated by a pneumatically actuated cylinder having spring-loaded piston means housed within a chamber 38 which is wholly within hopper 12. As shown, the chamber is closed at the top by an end wall 66 and is open at the bottom. The piston-cylinder combination, which is designated generally 18 in the drawings, is mounted in the chamber end wall 66 and thereby is connected to hopper 12 via the chamber end wall 66. The piston of the piston-cylinder combination 18 is preferably spring-loaded and operates in response to pressurized air to actuate tubular valve member 40 projecting from the open bottom end of the chamber 38. When the piston moves the tubular valve member 40 within chamber 38 downwardly into the position illustrated in Figure 4, the valve opens and permits discharging granular material which had been contained within the associated hopper 12 to flow downwardly through valve member 40 into weigh bin 15 of blender 10.

When pneumatic pressure supplied to a given piston is released, an internal spring portion of the piston-cylinder combination 18 causes the piston to retract, thereby retracting the valve member 40 in an upward direction, into the position illustrated in Figure 5, at which the valve is closed and granular material cannot flow downwardly from hopper 12 into the weigh bin 15.

Valve member 40 passes through the hollow chamber 38 with ample clearance. At its lower end, valve member 40 slidably engages a valve opening or orifice 80 in a bottom wall 81 of hopper 12. Granular or powdered material within hopper 12 may only discharge through opening 80 by passing through hollow valve member 40. When withdrawn to the closed position shown in Figure 5, the hollow interior of the valve member 40 remains in communication with valve opening 80, but because port 90 enters chamber 38 to a position above the open bottom end of chamber 38, granular or pulverulent material in hopper 12 cannot readily flow into and through port 90 to the interior of the hollow valve member 40 and hence through bottom opening 80.

To be effective, the granular or pulverulent material must have a characteristic angle of repose greater than zero degrees (0°) so that when valve member 40 is withdrawn into chamber 38 so that port 90 is above the open lower end 82 of chamber 38, material in the hopper 12 does not rise through the open bottom of the chamber 38. Thus, chamber 38, hollow valve member 40 and circular opening 80 in bottom wall 81 of the hopper cooperate to define bottom valve means 19 for each of the hoppers.

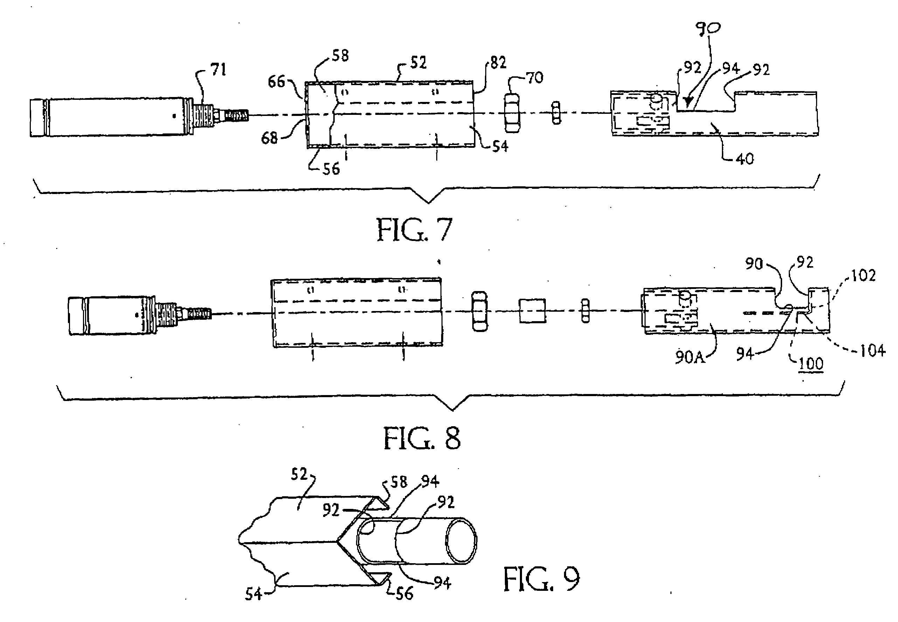

Hollow valve member 40 is connected to a movable piston shaft 42 of piston-cylinder combination 18 as illustrated in Fig. 4. Hollow valve member 40 and piston shaft 42 are housed within chamber 38 illustrated in stand-alone form in Figures 7, 8 and 9. Chamber 38 is of generally rectangular configuration, as illustrated in Figure 9, and has two adjoining closed sides 52, 54 and two adjoining open sides 56,58, all as illustrated in Figure 9. Open sides 56, 58 of chamber 38 (and therefore chamber 38) are secured to a sloping wall 60 and extend along an adjoining vertically-oriented wall 62 of a hopper 12. Walls 60, 62 adjoin one another at a right angle and combine with the sides 52 and 54 to form the rectangular chamber 38 which is closed at the top 66 and is open at the bottom 82 (see Figures 2, 4, 5 and 9).

The closed top portion 66 of chamber 38 has an aperture 68 formed therein (see Figure 7). Piston-cylinder combination 18 is secured in place on closed top 66 of chamber 38 and passes through aperture 68 with securement being effectuated by a nut 70 which threadedly engages a threaded portion 71 of the housing of piston-cylinder combination, retaining the piston-cylinder combination in position on closed top 66 of chamber 38 as illustrated in Figures 4 and 5.

Chamber 38 is preferably formed by folding a single piece of sheet metal into the shape of closed sides 52, 54 and open sides 56, 58. Closed top 66 is preferably welded onto the single piece of metal folded to form closed sides 52, 54 and open sides 56, 58 of chamber 38.

Further forming a portion of each valve assembly 19 in each hopper 12 is a bottom wall 81 disposed perpendicular to the sloping wall 60 within hopper 12, as shown in Figures 4 and 5. The bottom wall 81 has a planar portion with a circular aperture or orifice 80 which is of suitable size for sliding clearance of the lower portion of tubular valve member 40, which resides within and reciprocates through orifice 80, as illustrated in Figures 4 and 5.

The configuration of bottom wall 81 and diameter of aperture 80 vis-a-vis outer diameter of tubular valve member 40 are such that granular or other material within hopper 12 cannot pass between the exterior of tubular valve member 40 and the periphery of aperture 80. Additionally, other than aperture 80, bottom wall 81 closes the bottom of hopper 40. As a result, for any granular material contained within hopper 40 to exit downwardly therefrom, that granular material must pass through the hollow interior of tubular valve member 40.

Tubular valve member 40 has a lateral port 90 formed therein, defined by a pair of semi-circular circumferential edges 92 and a pair of axially extending edges 94 connecting edges 92 thereby to define a lateral semi-cylindrical port 90.

As illustrated in Figures 4 and 5 showing the valve assembly 19 in hopper 12 in the open and closed positions respectively, at the open position the piston in piston-cylinder combination 18 is extended such that piston rod 42 is extended downwardly and port 90 in tubular valve member 40 passes the open bottom 82 of the chamber 38. With tubular valve member 40 in this relationship with chamber 38, port 90 permits flow of granular material downwardly from within hopper 12 into the hollow interior of tubular valve member 40 and downwardly therethrough out ofhopper 12. This configuration is illustrated in Figure 4.

When the piston in piston-cylinder combination 18 is retracted, tubular valve member 40 is carried upwardly into a position at which port 90 passes above the open bottom 82 of chamber 38. At this position, communication from the interior ofhopper 12 with port 90 is blocked by the bottom edge of chamber 38 as illustrated in Figure 5. As a result, granular material within hopper 12 cannot reach the hollow interior of tubular valve member 40 and thus cannot flow downwardly through the hollow interior of tubular valve member 40 out of hopper 12. Hence, the valve assembly 19 is closed when in the position illustrated in Figure 5.

Piston-cylinder combination 18 is preferably a spring-loaded piston-cylinder combination such that a spring within the cylinder serves always to urges the piston portion of the combination upwardly considering Figures 4 and 5 into the position at which the port 90 of tubular valve member 40 does not confront the interior of hopper 12 and hence valve assembly 19 is closed. Application of pneumatic pressure to piston-cylinder combination 18 drives the piston of the combination downwardly, against the force of the spring, thereby moving port 90 of tubular valve member 40 into position confronting the interior of the hopper, whereby valve 19 is open. Valve 19 remains open for so long as the pneumatic pressure is applied to piston-cylinder combination 18. When pneumatic pressure is released, the spring forces the piston upwardly in Figures 4 and 5, thereby closing valve member 19.

Depending on the particular material being fed and blended, piston-cylinder combinations 18 may be operated to open and to close valves 19, i.e. to move valves 19 between open and closed positions. Alternatively, if it is desired to very precisely regulate the amount of granular material supplied from a given hopper 12, piston-cylinder combination 18 may be operated in a pulsating fashion with the piston rapidly reciprocating as pulses of pneumatic pressure are alternately applied and relieved respecting the piston of piston-cylinder combination via pneumatic fitting 96 illustrated in Figure 3.

Figures 6 and 8 illustrate an alternate embodiment of the tubular valve member which has been designated 40A in Figures 6 and 8. In this embodiment, tubular valve member 40A has a blocking wall 100 positioned in port 90 where blocking wall 100 includes a bottom portion 102 and an upwardly vertically extending weir portion 104. Bottom portion 102 runs along and is secured to a lower one of circumferential edges 92 of port 90 while weir portion 104 extends upwardly therefrom and runs along and is connected to at least one of the axial edges 94 of port 90, as illustrated in Figure 6. With this configuration of the blocking wall 100 in place on tubular valve member 40A, when the associated piston-cylinder combination is operated in a pulsed fashion, the rate of dispensing of granular material from the associated hopper may be extremely closely controlled. As the valve member 40A is pulsed, granular material flows up the blocking wall and over the weir portion 104 into the hollow interior of the element 40A from which it is discharged through orifice 80.

With this arrangement of hoppers 12 as illustrated generally in Figures 1, 2 and 3, blender 10 may be operated with only a single hopper in place or with two or with three or all four hoppers in place. Absence of one hopper or more than one hopper does not adversely affect operation.

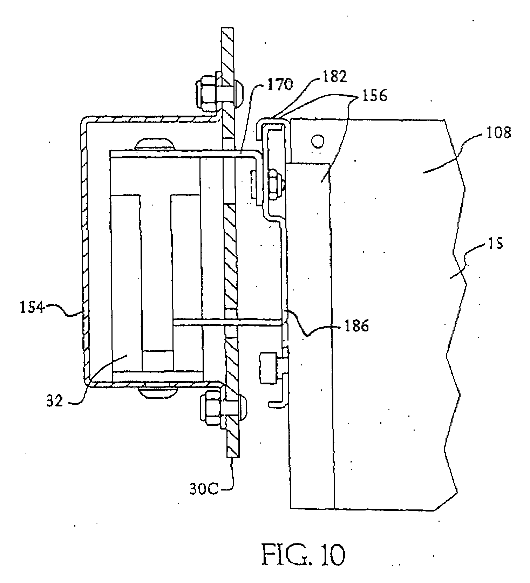

The control means for blender 10 operates to actuate the valves 19 sequentially so as to discharge material from each hopper 12 into the weigh bin 15 which is positioned within the frame 14 below the lower ends of the nested hoppers 12. Weigh bin 15 is mounted for ready removal and replacement within frame 14, and is supported singly by a load cell 32 mounted on panel 30C of the frame 14. Weigh bin 15 is supported by the load cell in a manner that weigh bin 15 is effectively cantilevered from load cell 32. The load cell 32 has a bracket 170 projecting through openings in wall 30C so as to be exposed within the interior of the frame as shown in Fig. 10. Load cell 32 is mounted on the bottom wall of a box 154 secured to the panel 30C so that the bracket 170 is exposed to the interior of frame 14.

Referring to Figure 1, there is connected to weigh bin 15 a weigh bin bracket 156 which is fixedly secured to weigh bin 15. Weigh bin bracket 156, as shown in Figure 10, is preferably fixed in facing contact with the complementary bracket 170 of the load cell 32.

A hook portion 182 of weigh bin bracket 156 extends horizontally outwardly from the weigh bin bracket at the upper extremity thereof while an abutment 186 of the weigh bin bracket 156 extends vertically downwardly from an outboard extremity of horizontally extending hook portion 182, which engages over an upstanding leg of the bracket 170.

The hook portion 182 and abutment permit weigh bin 15 and particularly weigh bin bracket 156 to move slidably horizontally, in a direction perpendicular to the plane of the paper in Figure 10, to be positioned so that weigh bin 15 effectively hangs on and is cantilevered from load cell 32. Load cell 32 senses the weight load of weigh bin 15 and any material contained therein.

To protect load cell 32 from contact and possible damage by operators, load cell 32 is preferably housed within load cell enclosure box 154 as illustrated in Figure 10. Load cell enclosure box 154 is in turn connected to upstanding panel member 30C of housing 14.

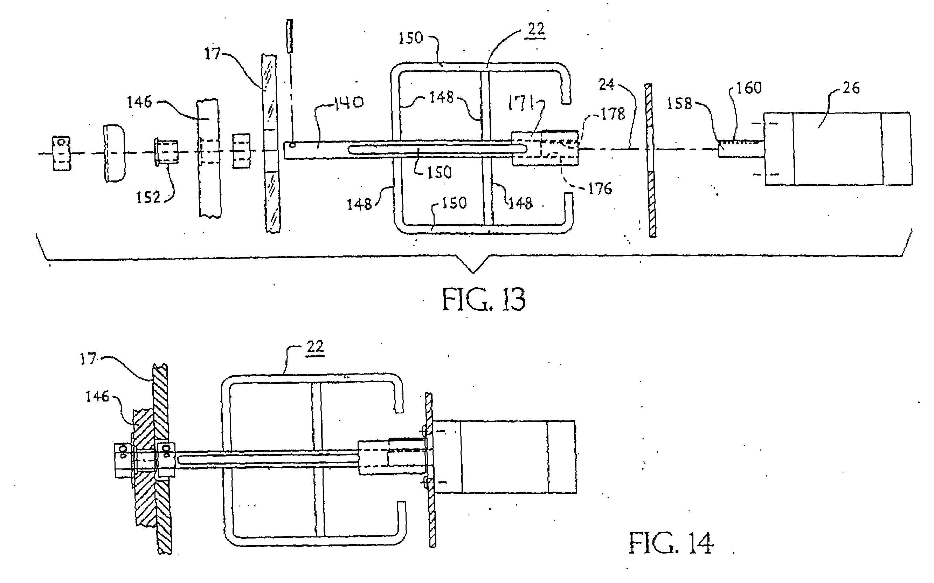

Positioned within and preferably slidably retained by frame 14 below weigh bin 15 is a mix chamber 20 having a mixing means which is preferably in the form of a mixing agitator 22 rotatably disposed therewithin. Agitator 22 is mounted for rotation about an axis 24 (see Fig. 13) preferably shared with a pneumatically powered reciprocating rotary drive 26.

Weight of material in weigh bin 15 is preferably sensed by the load cell 32 which is preferably connected to a microprocessor at a control station, not illustrated in the drawings, which regulates operation of gravimetric blender 10 through electrical connection with the load cell, the actuators which control the piston-cylinder combinations 18 which actuate the valves 19, the pneumatic drive, the piston-cylinder controlling weigh bin dump and the like.

The microprocessor provides control of gravimetric blender 10 by monitoring, preferably on a continuous basis, weight of material, if any, at a weighing station defined by weigh bin 15. By sensing weight of weigh bin 15 and actuating appropriate piston-cylinder combinations 18 in given hoppers 14, the microprocessor serially meters respective components of solid granular resinous material to the weighing station defined by weigh bin 15 until a pre-selected weight of each of the respective components has arrived at the weigh station. Blender 10 preferably operates by blending components by weight based on settings provided to and retained within the microprocessor.

Each granular material component is preferably dispensed separately into weigh bin 15 and then all components are dropped together into mixing chamber 20. Blender 10 is designed to mount directly over the feed throat of a process machine (not shown) used to mold or extrude plastic material with blender 10 being bolted or otherwise fixedly connected to the process machine. The blender 10 discharges the blended material from the mixing chamber 20 directly into the feed throat.

When exclusively solid materials are being blended, typically regrind material is dispensed first according to the percent of regrind material required. If no regrind material or a limited amount of regrind material is present, then portions of natural material, solid color material and additive material are increased to bring about a full batch weight. Natural material is typically added second. The amount of natural material added is preferably calculated by the microprocessor to leave exactly the right amount of room in the mix chamber for the solid color material and additive material. Once the natural material-fill portion of the cycle has been completed, the exact weight of the natural material that has been actually dispensed is determined to detect any errors. Based on this actual weight of natural material dispensed, color additive in the form of solid color additive material is metered into the weigh bin, then other solid additive materials are metered into the weigh bin in the same manner. All components are then dumped into the mixing chamber which is preferably continuously running.

The microprocessor provides the serially metered components unitarily to a mixing station defined by mix chamber 20 by opening weigh bin 15 thereby to permit the materials vertically supported thereby to fall downwardly into the mix chamber. Weigh bin 15 is preferably opened by a pneumatic piston-cylinder combination 136, which is controlled by the microprocessor and is illustrated Figure 3. Pneumatic piston-cylinder combination 136 is mounted on frame 14 and is proximate to, but not in contact with, weigh bin 15 so that weigh bin 15 opens responsively to movement of the piston member of the piston-cylinder combination.

Weigh bin 15 is illustrated in Figure 3 in the closed position. Weigh bin 15 is opened by actuating piston-cylinder combination 136, causing a piston rod to extend. When weigh bin 15 is in the closed position, there is no contact nor connection with the piston or its actuating cylinder.

Desirably, monitoring of weight of material at the weighing station is performed continuously by the microprocessor continuously digitally sensing signals supplied by the load cell identified generally 32. Weigh bin 15 is suspended by and from load cell 32 with respect to frame 14, and the microprocessor actuates the piston 136 to dispense material as required.

The solenoid valves and especially the solenoid actuators of the valves are preferably maintained at a control station within an enclosed frame which is remote from the blender and hence is not shown in the drawings. As with the microprocessor, the valves and their associated actuators are preferably remote from the gravimetric blender, being connected thereto via suitable pneumatic tubing.

Load cell 32 is fixedly connected to the bottom of the load cell enclosure box 154 to hold the load cell in position vis-a-vis the load cell enclosure box. Hence the bottom of the load cell is fixed whereas the upper portion of the load cell, where the load is sensed, is free to deflect in response to loads applied as result of material being in the weigh bin. Deflection sends a signal to the control station which actuates the valves 19 through solenoid valves controlling the air supply to cylinders 18, and cylinder 136.

Suitable load cells are available from Tedea Huntleigh, an Israeli company. Model 1010 load cells available from Tedea Huntleigh may be used. Solenoid actuated valves are available in the United States under the trademark MAC; the model 45A-L00-DDAA-1BA9 is suitable.

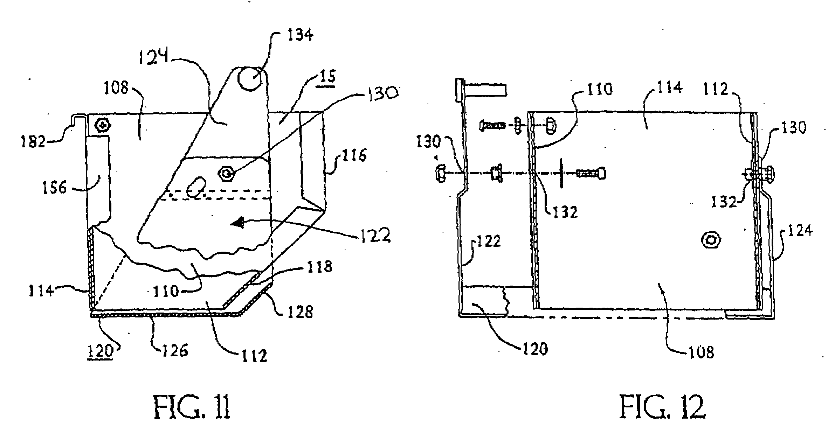

Weigh bin 15 includes a stationary open bottomed basket portion 108 illustrated in Figures 11 and 12 where basket portion 108 is also visible in Figure 3. Basket portion 108 is preferably formed of sheet metal with planar front and rear portions designated 110, 112 in Figures 11 and 12. The top of basket 108 is open to receive granular material, and optionally liquid color, from above, with the granular material being supplied from one or more of hoppers 12.

Basket 108 further includes one vertically elongated side 114 which mounts the bracket 156 at one side of basket 108 and a vertically foreshortened side 116 at the other side of basket 108.

Basket 108 further includes a sloped downwardly facing surface 118. The bottom of basket 108, as shown in Figures 11 and 12, is open to permit downward flow of granular and, optionally, liquid color material, but of basket 108.

Weigh bin 15 further includes a dump flap designated generally 120 in the drawings which is pivotally connected to basket portion 108 so that upon pivotal motion of dump flap 120, the contents of basket 108 are dropped out of weigh bin 15 and permitted to fall into mix chamber 20. Dump flap 120 is illustrated in Figures 11 and 12 and is also clearly visible in Figure 3.

Dump flap 120 includes a pair of upstanding wall portions 122,124, both of which extend generally vertically upwardly from a planar bottom portion 126. Dump flap 120 further includes an angled bottom portion 128 which is positioned at an angle to essentially complementary fit against sloped downwardly facing surface 118 of basket 108, as shown in Figure 11.

Upstanding walls 122,124 of dump flap 120 have apertures 130 formed therein on a common horizontal axis: Apertures 130 receive pin, screw or other pivotal connection means for pivotally connecting dump flap 120 to basket 108 through similar apertures 132 formed in sides 110, 112 of basket 108.

Affixed to a vertical extremity of an upstanding extension portion of upstanding wall 124 of dump flap 120 is a flat head rivet 134, which is preferably welded in position to serve as an operator for pivoting the flap 120 relative to the basket 108.

Mounted in solid side panel 30A of frame 14, as illustrated in Figure 3, is a piston-cylinder combination designated generally 136 in Figure 3. Piston-cylinder combination 136 is preferably mounted using a suitably threaded nut, illustrated in Figure 3 but not numbered, which engages a threaded collar portion of piston-cylinder combination 136 protruding through an aperture of suitable size in side panel 30A.

Affixed to the end of a piston rod extending from piston-cylinder combination 136 is a preferably plastic, such as nylon, knob 138 illustrated in Figure 3.

When material within weigh bin 15 is to be dumped, piston-cylinder combination 136 is actuated at the control station by supply of pressured air thereto. This causes the piston portion of piston-cylinder combination 136 to extend, moving to the left in Figure 3. As a result, knob 138 contacts rivet-operator 134 which is fixed in the upper extremity of vertical, elongated side wall 124 of dump flap 120, thereby causing dump flap 120 to pivot in a counterclockwise direction, viewed in Figure 3, about a pivot point defined by pivotal connections mounted in apertures 130 illustrated in Figure 12.

This pivotal, rotary motion of dump flap 120 in a counterclockwise direction (considering Figures 3 and 11) about pivot points 130 opens the bottom of basket 108 permitting material contained within the weigh bin defined by dump flap 120 and basket 108 to drop into mixing chamber 20.

Knob 138 only contacts rivet-operator 134 when piston-cylinder combination 136 has been actuated and the dumping operation is taking place. At all other times, there is no physical contact between weigh bin 15 and knob 138. A spring (not shown) biases dump flap 120 clockwise (considering Figures 3 and 11) towards the closed position.

Weigh bin 15 is connected to load cell 32 through an aperture in solid side panel 30C of frame 14, by complementary brackets 156 and 186, as illustrated in Figure 10. Other suitable means for mounting weigh bin 15 respecting load cell 32 are disclosed in Patent Cooperation Treaty patent application PCT/US96/19485, filed 10 December 1996 by Maguire Products, Inc., the disclosure of which is incorporated by reference.

To afford thorough mixing of the blended materials deposited in mixing chamber 20 by operation of dump flap 120, mixing agitator 22 is rotatably journaled on preferably transparent, removable front panel 17 of frame 14. Panel 17 fits closely along forwardly facing edges of solid side panels 30A and 30C and is fixed thereto via quick release, hand-actuated clips designated generally 144 in Figure 3. These clips are mountingly connected to a horizontal bar 140 extending across front panel 17 at a lower portion thereof, which provides a solid, preferably metal receptacle mounting for journaling of agitator 22 in transparent removable front panel 17.

As illustrated in Figures 13 and 14, agitator 22 includes a central shaft portion 140 with a number of spokes 148 extending radially outwardly therefrom. Extending longitudinally along the outer extremities of radial spokes 148 are mixer rails 150 which extend longitudinally along a major length of central shaft 140 and are curved radially inwardly at the ends of rails 150 which are remote from front panel 17 when the agitator is journaled in panel 17.

Journaling of central shaft 140 in front panel 17 is accomplished using a plastic, preferably Nylon or Celcon, cylindrical bearing member 152 illustrated in Figure 13. The left end of shaft 140 (when considering Figure 13) fits into bearing member 152. Mixer rails 150 and particularly the curved, radially inwardly facing extremities thereof 151 stop short of center shaft 140 in order to provide clearance for a coupling member which removably connects the agitator 22 to the rotary reciprocating drive means.

To facilitate removal of front panel 17 from blender 10, and to provide strength for journaling of bearing member 152 in front panel 17, the metal horizontal bar 146 is affixed to front panel 17 and provides a position of attachment for clips 144. A handle 256 is mounted on horizontal bar 146 and provides convenient hand gripping for removal of front panel 17 when clips 144 have been disengaged.

Agitator 22 is driven in a manner to reciprocatingly rotate so that agitator 22 rotates about axis 24 defined by central shaft 140 through an angle of about two hundred seventy degrees (270°) and then reverses, rotating in the opposite direction thorough an angle of about two hundred seventy (270°). This is accomplished by using a drive means 26 having two pneumatically driven piston-cylinder combinations reciprocating a rack to which a pinion gear is connected. This drive means is a purchased item and is mounted on the exterior of a rear panel 30B of frame 14 in position to provide coaxial driving rotation of agitator 22.

Means for coupling and decoupling agitator 22 to the reciprocating rotational drive means is provided by a coupling assembly having male and female members which are illustrated generally in Figures 13 and 14. The smaller of the two members forming the coupling is a shaft 158 which is generally cylindrically configured with an axially-extending flat 160 in its cylindrical exterior surface. Female member 171 is of generally cylindrical configuration, with a bore 172 extending the longitudinal length thereof and having a longitudinal bore 176 extending over just a portion of the longitudinal length of bore 172, with a complementary flat 178 formed in bore 176 for fitting about the driving shaft 158 providing the source of reciprocating rotational movement for agitator 22.

An important aspect of the invention is the feature whereby the valves designated generally 19 are entirely contained within hoppers 12 and are fixedly secured thereto. As a result, when an operator desires to change a hopper, all that is required is for the operator to disconnect a pneumatic tube from a pneumatic fitting 96 (see Figs. 1 and 3) on a given hopper and lift the hopper off of the supporting outwardly flared cradle, formed by guide flaps 34, on which the hopper rests. Hoppers 12 are not mechanically secured to the remainder of blender 10; this is not necessary. The external pneumatic fitting 96 for each hopper is preferably a quick-connect fitting receiving a pneumatic line 98 connecting the blender control station to the piston-cylinder combination 18 within each hopper 12.

The integral construction of the valve and hopper assembly permits each valve to be removable integrally with its associated hopper, thereby permitting various size valves to be mounted in hoppers. This facilitates changing of valve size by the user so that the user merely need remove the hopper having a given size valve and substitute another hopper having a smaller or other desired size valve in its place. The integral valve-hopper design also contributes to safety in that individuals cannot actuate a valve and injure themselves when a hopper is removed from the blender. The valve and the shut-off mechanism for granular material simply is not present when the hopper is not in place. Once the hopper is in position, an individual cannot insert the individual's fingers into the way of any of the moving parts of the valve within the hopper.

The air cylinders actuating the valves are preferably spring return air cylinders; internal springs act to pull the cylinder pistons up and pull the rods attached to the pistons into the upper position, creating a shut-off. When the tubular valve members 40 are in the extreme upward positions, no material can flow downwardly therethrough; the hopper is necessarily closed at the bottom and can easily be removed from the cradle formed by the diverging guide flaps 34 without spilling any material that may be in the hopper.

In the variation of this valve which is illustrated in Figures 6 and 8, where the hemispheric or half-circular opening in a tubular portion is covered at the bottom and has a wall running upwardly, this tubular valve member 40A may be reciprocated up and down to provide very accurate downward metering of material. When such accurate metering of material is desired, a stroke limiter may be used on the rod 42 which connects the associated piston.

The piston-cylinder combination 18 is desirably reciprocated electronically, permitting the piston to cycle up to six times per second providing the reciprocation of the tubular valve member 40A. Chamber 38 is stationary, fitting around the reciprocating tubular valve member 40A and being secured to hopper 12. When tubular valve member 40 moves up and down, chamber 38 allows granular material to enter tubular valve member 40 only when tubular valve member 40 and particularly port 90 therein is below the horizontal edge defining the lower boundary of chamber 38. Preferably, tubular valve member 40 is reciprocated to facilitate flow through hollow tubular valve member 40.

One pneumatic line preferably goes to each hopper 12 with a quick disconnect fitting to allow the hopper to be removed from the blender. Air is pulsed back and forth by solenoid valves. Since the piston-cylinder combinations have spring return pistons, only one line is needed to each piston-cylinder combination. This is in contrast to prior art gravimetric blenders in which two lines are provided to piston-cylinder combinations driving the various slide gates and other parts of the machine.

The pneumatic supply line goes through the side of each hopper 12 and connects to the piston-cylinder combination within the hopper. Removal of the hopper and piston-cylinder combination is facilitated by disconnecting the pneumatic line at the quick disconnect fitting 96 provided on the exterior of each hopper 12 and picking up each hopper 12 and its associated piston-cylinder assembly 18, which is one effectively unitary assembly and may be lifted directly off from the cradle formed at the top of blender 10 by the guide flaps 34.

Another important aspect of the invention is in the provision of the separation of knob 138 from rivet-operator 134 for opening dump flap 120 of weigh bin 15. With piston-cylinder combination 136 and knob 138 physically separated from weigh bin 15, there is no external connection to weigh bin 15 during the weighing process and therefore, there is no chance of something such as a pneumatic line introducing an error into the weighing procedure.

Mixing chamber 20 is equipped with a curved side and bottom member which slides into an out of the mixing chamber. This curved member is visible in Figure 3, and is sometimes referred to as a mix chamber insert slide. The slide rests on a plastic saddle 184 which is visible in Figure 3 and is secured to the metal bottom 196 of frame 14. Solid side panels 30A, 30B and 30C of frame 14 are preferably welded to bottom 196 along the three sides of respective contact therewith. Bottom 196 preferably protrudes forwardly relative to sides 30 so as to provide a bottom support transom for transparent removable front panel 17 when panel 17 is in place on blender 10.

Yet another feature of the invention is with agitator 22 being journaled within and removable unitarily with transparent removable front panel 17, there is no need for any interlock between front panel 17 and the drive means providing the reciprocating rotational drive for the agitator. Since agitator 22 is removed with transparent front panel 17 whenever panel 17 is removed, the only moving part remaining in the mixing chamber is the rotating shaft member 158.

When the blender is used, there is preferably a single controller provided for each blender in a control station at a remote locale. The controller and microprocessor preferably are not mounted on the frame of the blender as is the case with known, larger gravimetric blenders.

Material components which should be fed and controlled in very, very small amounts, such as color components, maybe controlled to levels of 3% or 4% of the total blend when the pulsing action of a piston-cylinder combination is applied to a modified version of the tubular valve member 40A as illustrated in Figures 6 and 8. In addition to color additives, ultraviolet stabilizers, inhibitors, strengtheners and the like sometime need to be fed in such very, very small amounts into plastic resin blends prior to molding.

Using the modification of the tubular valve member 40 illustrated in Figures 6 and 8 and with pulsing action of the spring equipped piston-cylinder combination 18 allows very fine feeding of material. If air pressure is reduced to piston-cylinder combination 18, so as to soften the severity of the reciprocation of the air cylinder, the air cylinder can be regulated to a point where as little as two to three grams of material per second can be accurately fed and feeding can be repeatedly controlled at that rate.

Another of the important features of this invention is the compact size of the gravimetric blender. The compact size of this blender facilitates use of this blender with very small injection molding and compression molding machines and with small extruders. The small size of the blender facilitates dispensing of exceedingly small and precisely measured amounts of plastic resin material and other granular materials, as well as liquid color if that might be desired as a part of the blend, for supplying such small molding machines and extruders.

In the preferred version, hoppers 12 are about twenty (20) centimeters square at the upper extremities thereof, this is denoted by dimension A in Figure 2. The close spacing together of adjacent hoppers, with adjacent hoppers being only about thirty-one (31) millimeters apart, results in an overall maximum width dimension indicated as B in Figure 2 of about forty-one (41) centimeters.

Similarly, the blender is very compact in height. The blender is only about fifty-six (56) centimeters from the top of the hoppers to the base portion of the blender frame. This fifty-six (56) centimeters dimension is indicated by dimensional arrow C in Figure 3. The pneumatic piston which preferably actuates the weigh bin to dump the weigh bin contents into the mixing chamber is preferably about twenty-nine (29) centimeters above the base; this dimension is indicated by dimensional arrow D in Figure 3.

Utilizing this reduced size gravimetric blender, batches of material of about 400 grams may be produced with such batches being produced in less than one minute per batch. Hence, about twenty-three (23) kilograms per hour of blended resin material can be produced using the blender.

The valve members 19 with the full half-cylindrical opening as illustrated in Figures 4, 5 and 7 may dispense material at about 35 grams per second. When the pulsing technique is used and the modified version of the tubular valve member 40A illustrated in Figures 6 and 8 is used, feeding of plastic resin material pellets can be controlled to a level down below one gram of feed per second.

## Claims

1. A granular material storage hopper (12) adapted to matingly removably rest on a frame portion (14) of a gravimetric blender (10), having a material discharge orifice proximate the hopper bottom, with the gravimetric blender including a weigh bin (15) receiving material dispensed from the hopper, at least one load cell (32) for sensing weight of material received in the weigh bin and a mix chamber (20) below the weigh bin for collecting and mixing material received from the weigh bin after weight has been sensed, comprising means (19) for selectably dispensing granular material from the hopper through said material discharge orifice proximate the hopper bottom, being fixedly connected to the hopper and movable unitarily with the hopper as the hopper is lifted from the frame.

2. A hopper as claimed claim 1 wherein said means (19) for selectably dispensing granular material from the hopper (12) through the material discharge orifice comprises:
a. a valve member reciprocally resident within the material discharge orifice over at least a portion of a reciprocal stroke, the member having a material inlet aperture formed therein remote from a discharge extremity of the member, the discharge extremity of said member having a material outlet aperture for outward passage therethrough of dispensed granular material;
b. a skirt connected to the hopper interior, at least partially surrounding said member and terminating short of the material discharge orifice to facilitate communication between material within the hopper and the material inlet aperture of said member when said member is at a first position in a range of reciprocating travel, the aperture being shielded by the skirt and hence in noncommunicative relationship with material in said hopper when said member is at a second position in said range of travel; and
c. means for reciprocably moving said member within said range.

3. A hopper as claimed in claim 2 wherein said skirt includes two planar portions perpendicular to one another and fixedly connected to the interior of said hopper.

4. A hopper as claimed in any one of claims 1 to 3 wherein said hopper is manually liftable from the frame.

5. A hopper as claimed in any one of claims 1 to 4 wherein said hopper is removable from the frame without use of tools.

6. A hopper as claimed in any one of claims 2 to 5 wherein said skirt is fixedly connected to the interior of said hopper.

7. A hopper as claimed in any one of claims 2 to 6 wherein said first and said second positions define extremities of said range.

8. A hopper as claimed in any one of claims 2 to 7 wherein the valve is connected to the interior of the hopper.

9. A hopper as claimed in any one of claims 2 to 8 wherein the valve is within the hopper.

10. A hopper as claimed in claim 9 wherein the valve is connected to an interior surface of the hopper.

11. A hopper as claimed in any one of claims 2 to 10 wherein the skirt is connected to at least one interior surface of the hopper.

12. A hopper as claimed in claim 11 wherein the skirt is connected to two interior surfaces of the hopper.

13. A hopper as claimed in claim 12 wherein one of the surfaces extends vertically.

14. A hopper as claimed in claim 13 wherein a second one of the surfaces extends upwardly at an angle to the vertical.

15. A hopper as claimed in claim 13 or claim 14 wherein the member moves parallel with the surface.

16. A hopper as claimed in any one of claims 6 to 15 wherein the skirt has two exteriorly facing surfaces.

17. A hopper as claimed in claim 16 wherein at least one of the exteriorly facing surfaces is planar.

18. A hopper as claimed in claim 16 or claim 17 wherein the exteriorly facing surfaces are perpendicular to one another.

19. A hopper as claimed in claim 2 where in the member moves at an angle to the vertical.

20. A hopper as claimed in claim 2 where in the member moves vertically.

21. A blender as claimed in claim 1 wherein said hopper is manually removable from the frame without use of tools.

22. A blender as claimed in claim 1 wherein said hopper is manually removably liftable from the frame without use of tools.
